# EUROPÄISCHE PATENTSCHRIFT

(11) **EP 3 519 144 B1**
(45) Veröffentlichungstag und Bekanntmachung des Hinweises auf die Patenterteilung: **08.11.2023**
(21) Anmeldenummer: 17746023.5
(22) Anmeldetag: 20.07.2017
(51) Int. Cl.: B25J 15/00, B25J 15/06

(54) **ENDEFFEKTORANORDNUNG**
END EFFECTOR ASSEMBLY
ENSEMBLE EFFECTEUR TERMINAL

(30) Priorität: 28.09.2016 DE 102016011618
(43) Veröffentlichungstag der Anmeldung: 07.08.2019
(73) Patentinhaber: Broetje-Automation GmbH, 26180 Rastede (DE)
(72) Erfinder: REINHOLD, Raphael, 26409 Wittmund (DE); QUAST, Sascha, 26135 Oldenburg (DE)
(74) Vertreter: Gottschald Patentanwälte Partnerschaft mbB
(86) Internationale Anmeldenummer: PCT/EP2017/068305
(87) Internationale Veröffentlichungsnummer: WO 2018/059776

(56) Entgegenhaltungen:
- DE-A1- 10 319 272
- DE-T2- 60 313 279
- JP-A- 2003 048 620
- JP-A- 2003 128 279
- JP-A- 2010 264 551

## Beschreibung

Die Erfindung betrifft eine Endeffektoranordnung mit einem Endeffektor für einen Manipulator und mit einer Steuerung für den Endeffektor gemäß dem Oberbegriff von Anspruch 1, ein Verfahren zum Betreiben einer Endeffektoranordnung gemäß Anspruch 7 sowie einen Manipulator gemäß Anspruch 18.

Endeffektoranordnungen sind beispielsweise aus der DE 10 2011 106 214 A1 und aus der DE 10 2015 009 177 A1 bekannt.

Ferner sind aus dem Stand der Technik verschiedene Arten von Greifvorrichtungen für Endeffektoren von Manipulatoren bekannt. Dies sind beispielsweise Vakuumgreifvorrichtungen und Bernoulli-Greifvorrichtungen. Vakuum-Greifvorrichtungen weisen in der Regel eine Ansaugkammer auf, in welcher ein statischer Unterdruck zum Halten des Werkstücks erzeugt wird. Der Unterdruck kann nach dem Venturi-Prinzip oder mittels einer Unterdruckquelle erzeugt werden. Darüber hinaus und unabhängig hiervon sind sogenannte Bernoulli-Greifvorrichtungen bekannt, die eine Strömung zwischen Greifvorrichtung und Werkstück derart erzeugen, dass ein Unterdruck zum Halten des Werkstücks zwischen der Bernoulli-Greifvorrichtung und dem Werkstück entsteht.

Ferner sind Vorrichtungen zum Halten von Wafern aus der DE 603 13 279 T2, der DE 103 19 272 A1, der JP 2003-48620, der JP 2003-128279 A und JP 2010-264551 A bekannt.

In der Praxis hat sich gezeigt, dass weder Vakuum-Greifvorrichtungen noch Bernoulli-Greifvorrichtungen den Anforderungen im Rahmen eines Handhabungsvorgangs im vollen Umfange gerecht werden können. Zwar ermöglichen die Vakuum-Greifvorrichtungen ein sicheres Halten nach Art eines Festlagers, was allerdings mit eingeschränkter Greifgenauigkeit einhergeht. Die Bernoulli-Greifvorrichtungen dagegen ermöglichen ein schwimmendes Halten, so dass eine Ausrichtung des Werkstücks jederzeit möglich ist. Allerdings sind hiermit nur geringe Transportgeschwindigkeiten möglich.

Der Erfindung liegt die Aufgabe zugrunde, eine Greifvorrichtung bereitzustellen, welche den Anforderungen im Rahmen eines Handhabungsvorgangs besser gerecht wird.

Gelöst wird diese Aufgabe bei einer Endeffektoranordnung gemäß dem Oberbegriff von Anspruch 1 durch die Merkmale des kennzeichnenden Teils von Anspruch 1.

Dadurch, dass die Greifeinrichtung sowohl mit einer Bernoulli-Greifeinheit als auch mit einer andersartigen Greifeinheit ausgestattet ist, lassen sich die Vorzüge unterschiedlicher Greifeinrichtungen miteinander kombinieren. Im Einzelnen ist die zugeordnete Steuerung dazu eingerichtet, während des Haltens des Werkstücks den Endeffektor zwischen einem Halten des Werkstücks mittels mindestens einer Bernoulli-Greifeinheit und einem Halten mit mindestens einer andersartigen Greifeinheit umzuschalten. Vorschlagsgemäß ist es beispielsweise möglich, zum Verformen des Werkstücks Bernoulli-Greifeinheiten zuzuschalten und zum Aufnehmen und/oder Transportieren und/oder Ablegen des Werkstücks die andersartigen Greifeinheiten zu verwenden. Es wird ein flexibles Handhaben von Werkstücken unterschiedlichster Abmessung bei hohen Prozessgeschwindigkeiten mit ein und derselben Endeffektoranordnung ermöglicht.

Hier und vorzugsweise ist es so, dass eine Greifvorrichtung die Bernoulli-Greifeinheit und die andersartige Greifeinheit aufweist. Besonders bevorzugt ist es dabei, dass die Greifvorrichtung, wie in der mit selben Anmeldetag eingereichten Patentanmeldung beschrieben, ausgebildet ist. Diese wird insoweit zum Gegenstand dieser Anmeldung gemacht.

Vorzugsweise handelt es sich bei der Greifeinheit, welche das Werkstück nach einem anderen physikalischen Prinzip trägt, um eine Vakuum-Greifeinheit mit einer Ansaugkammer, wobei in der Ansaugkammer und damit in einem begrenzten Bereich zwischen der Vakuum-Greifeinheit und der Werkstückoberfläche ein Unterdruck zum Halten des Werkstücks erzeugbar ist. Vakuum-Greifeinheiten haben sich insbesondere für ein festes Halten von Werkzeugen bewährt.

Es ist vorgesehen, dass der Endeffektor eine Stellanordnung aufweist, durch deren Verstellung die Greifvorrichtungen der Werkzeuganordnung zueinander verstellbar sind. Vorzugsweise weist der Endeffektor ferner eine Trägeranordnung auf, an der die Werkzeuganordnung bildenden Greifvorrichtungen angeordnet sind, wobei mittels der Stellanordnung die Greifvorrichtungen durch eine Verstellung der Trägeranordnung zueinander verstellbar sind. Hierdurch ist es möglich, das Werkstück nach dem Aufnehmen und vor dem Ablegen zu verformen. Insbesondere für die Herstellung von Faserverbundbauteilen hat es sich bewährt, wenn der Endeffektor die Form des Werkstücks vor dem Ablegen an die Form der Ablage anpasst. Besonders bevorzugt ist es dabei, dass die Stellanordnung mindestens einen, insbesondere stufenlos verstellbaren Stellantrieb aufweist, der insbesondere von der dem Werkstück abgewandten Seite des Trägers aus auf den Träger zu dessen Verformung wirkt. Vorzugsweise sind mehrere Stellantriebe vorgesehen, die über die Oberfläche des Trägers verteilt angeordnet sind. Dabei hat sich insbesondere die Verwendung von unterschiedlichen Stellantrieben bewährt.

Hier und vorzugsweise ist der Endeffektor der Endeffektoranordnung wie in der DE 10 2011 106 214 A1 und/oder in der DE 10 2015 009 177 beschrieben ausgebildet, welche insoweit zum Gegenstand dieser Anmeldung gemacht werden.

Darüber hinaus wird die eingangs beschriebene Aufgabe verfahrensmäßig durch ein Verfahren gemäß Anspruch 7 gelöst. Es werden die gleichen Vorteile erreicht, wie vorstehend mit der Endeffektoranordnung beschrieben. Dabei wird die beschriebene Endeffektoranordnung für das Verfahren verwendet.

Gemäß der Weiterbildung nach Anspruch 8 schaltet die Steuerung während des Haltens des Werkstücks eine Greifvorrichtung zwischen einem Halten mittels einer Bernoulli-Einheit und einem Halten mittels der andersartigen Greifeinheit, insbesondere der Vakuum-Greifeinheit, um. Durch das Vorsehen von Greifvorrichtungen mit sowohl einer Bernoulli-Greifeinheit als auch einer andersartigen Greifeinheit wird eine besonders kompakte Ausgestaltung der Greifvorrichtung ermöglicht, welche auch sehr flexibel Werkstücke unterschiedlicher Größe handhaben kann.

Weiter vorzugsweise ist es vorgesehen, dass gemäß Anspruch 9 der Endeffektor das Werkstück durch eine Verstellung der Schaltanordnung vor dem Ablegen umformt. Dies hat sich insbesondere für die Herstellung von Faserverbundbauteilen und/oder Hybridbauteilen bewährt.

Gemäß Anspruch 10 wird vorgeschlagen, dass der Endeffektor, das Werkstück haltend, dieses relativ zur Werkzeuganordnung verlagert. Es ist also nicht zwangsweise notwendig, das Werkstück abzulegen und neu aufzunehmen, um eine Verlagerung am Endeffektor vorzunehmen. Vorzugsweise kann der Endeffektor durch das Drücken an eine insbesondere ortsfeste Ausrichtfläche das Werkstück relativ zur Werkzeuganordnung verlagern, oder, der Endeffektor kann durch das Umformen des Werkstücks dieses relativ zur Werkzeuganordnung verlagern. Letzteres ist sogar während des Transports zum Ablageort möglich.

Gemäß Anspruch 12 ist die Steuerung zum Schalten der Greifvorrichtung einzeln oder in Gruppen in verschiedene Betriebsmodi ausgebildet. Hierdurch ist eine ganz besonders flexible Steuerung des Endeffektors möglich.

Gemäß Anspruch 13 wird vorgeschlagen, dass das Werkstück von dem Endeffektor mit mindestens einer Greifvorrichtung, vorzugsweise mit der Mehrzahl der aktiven, weiter vorzugsweise allen aktiven Greifvorrichtungen im Vakuum-Betriebsmodus aufgenommen und/oder abgelegt wird. Ein Aufnehmen im Vakuum-Betriebsmodus bzw. ein Ablegen im Vakuum-Betriebsmodus ermöglicht ein sicheres Ablegen des Werkstücks auch gegenüber anderen Werkstücken, welche sich gegebenenfalls in Nahbereich des Ablegeorts bzw. Aufnahmeorts befinden.

Darüber hinaus wird die vorstehend benannte Aufgabe durch einen Manipulator gemäß Anspruch 18 gelöst.

Mit dem vorschlagsgemäßen Manipulator werden dieselben Vorteile erreicht, wie vorstehend im Zusammenhang mit der Endeffektoranordnung und dem vorstehend beschriebenen Verfahren.

Vorzugsweise ist der Manipulator mit einer Endeffektoranordnung der vorstehend beschriebenen Art und/oder zur Durchführung eines Verfahrens der vorstehend beschriebenen Art ausgebildet.

Im Folgenden wird die Erfindung anhand einer lediglich Ausführungsbeispiele darstellenden Zeichnung näher erläutert. In der Zeichnung zeigt
- Fig. 1: eine vorschlagsgemäße Endeffektoranordnung, deren Endeffektor an einem vorschlagsgemäßen Manipulator angeordnet ist,
- Fig. 2: einen Endeffektor einer vorschlagsgemäßen Endeffektoranordnung,
- Fig. 3: einen vorschlagsgemäßen Manipulator bei der Fertigung von einem Hybridbauteil,
- Fig. 4: eine Greifvorrichtung, welche bevorzugt am vorschlagsgemäßen Endeffektor angeordnet ist,
- Fig. 5: die Greifvorrichtung gemäß Fig. 4 in einem Bemoulli-Betriebsmodus und
- Fig. 6: die Greifvorrichtung gemäß Fig. 5 in einem Vakuum-Betriebsmodus.

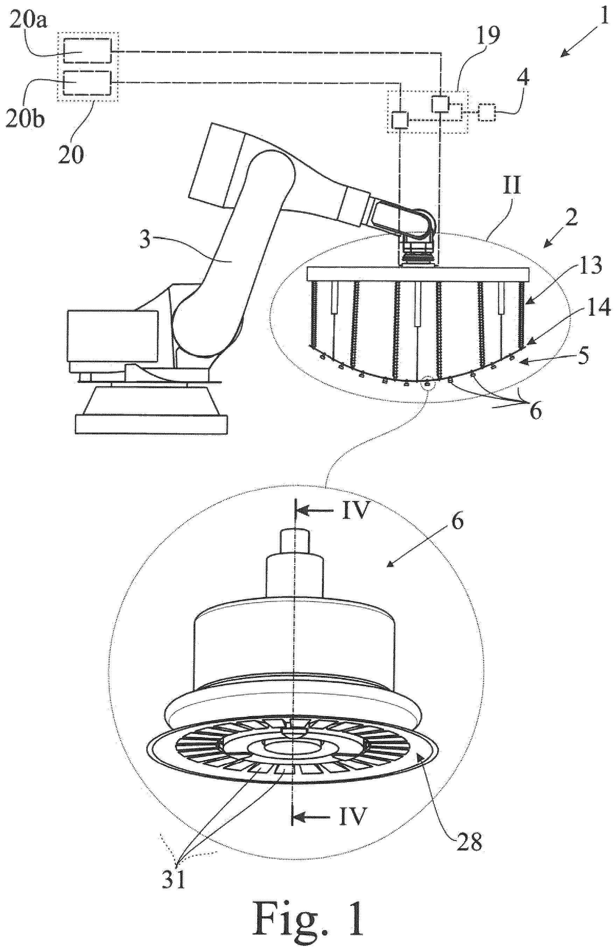

In Fig. 1 ist eine vorschlagsgemäße Endeffektoranordnung 1 mit einem Endeffektor 2 für einen Manipulator 3 und mit einer Steuerung 4 für den Endeffektor 2 gezeigt. Der Manipulator 3, insbesondere Roboter, weist vorzugsweise mindestens drei Achsen, insbesondere vier oder fünf oder besonders bevorzugt sechs Achsen auf. Ferner ist eine Werkzeuganordnung 5 mit mehreren Greifvorrichtungen 6 zum Halten eines Werkstücks 7 über seine Werkstückoberfläche 22 vorgesehen.

Das Werkstück 7 kann ein räumliches Werkstück 7, wie beispielsweise ein Paket oder ein Strukturbauteil sein, insbesondere kann das Werkstück 7 ein Landkraftfahrzeugstrukturbauteil und/oder ein Flugzeugstrukturbauteil sein.

Mit dem Endeffektor 2 können jedoch auch biegeschlaffe Materialien als Werkstück 7 gehalten werden. Diese biegeschlaffen Materialien können insbesondere Aluminiumbleche bzw. Aluminiumfolien und/oder Fasermaterialien, insbesondere Fasermatten, sein. Bei den Fasermaterialien kann es sich um trockene Fasern, insbesondere Fasermatten, handeln, und/oder es können vorimprägnierte Fasern, insbesondere vorimprägnierte Fasermatten, sein, sogenannte Prepregs.

Es können also sowohl luftdurchlässige als auch luftdichte Werkstücke mit dem Endeffektor 2 gehalten werden.

Der Endeffektor 2 hat sich insbesondere zur Herstellung von Hybridbauteilen wie beispielsweise Glare^{®} bewährt. Diese Hybridbauteile werden hier und vorzugsweise durch das Aufeinanderlegen mehrerer biegeschlaffer Materialien hergestellt. Auch flächige Glasfaser- oder CFK-Bauteile lassen sich mit dem vorschlagsgemäßen Endeffektor 2 herstellen.

Mindestens eine Greifvorrichtung 6 weist eine Bernoulli-Greifeinheit 8 mit einer Ausströmeinheit 9 zum Ausleiten einer Strömung S_{B} aus der Bemoulli-Greifeinheit 8 zwischen Greifvorrichtung 5 und Werkstück 7 in der Art auf, dass die Strömung S_{B} in einem begrenzten Bereich zwischen Greifvorrichtung 6 und der Werkstückoberfläche 22 einen Unterdruck zum Halten des Werkstücks 7 erzeugt.

Darüber hinaus weist mindestens eine Greifvorrichtung 6 eine andersartige Greifeinheit 10 auf, welche das Werkstück 7 nach einem verglichen mit der Bernoulli-Greifeinheit 6 anderen physikalischen Prinzip trägt.

Die Steuerung 4 ist nun dazu eingerichtet, während des Haltens des Werkstücks 7 den Endeffektor 2 zwischen einem Halten des Werkstücks 7 mittels mindestens einer Bernoulli-Greifeinheit 8 und einem Halten mit mindestens einer andersartigen Greifeinheit 10 umzuschalten.

Es wird hier und vorzugsweise also mindestens eine Bemoulli-Greifeinheit 8 abgeschaltet und eine andersartige Greifeinheit 10 zugeschaltet, oder eine andersartige Greifeinheit 10 abgeschaltet und eine Bemoulli-Greifeinheit 8 zugeschaltet. Hierdurch ist es möglich, das Werkstück 7 immer mit der für die gerade vom Manipulator 3 bzw. Endeffektor 2 durchzuführende Aufgabe idealen Greifvorrichtung 6 zu verwenden. Hierdurch kann Energie gespart und es können bestimmte Aufgaben besser ausgeführt werden.

Hier und vorzugsweise ist es so, dass eine Greifvorrichtung 6 die Bemoulli-Greifeinheit 8 und die andersartige Greifeinheit 10 aufweist. Besonders bevorzugt weist die Mehrzahl der Greifvorrichtungen 6, weisen insbesondere alle Greifvorrichtungen 6, der Werkzeuganordnung 5 die Bemoulli-Greifeinheiten 8 und die andersartige Greifeinheit 10 auf.

Besonders bewährt hat es sich, dass die Greifeinheit 10, welche das Werkstück 7 nach einem anderen physikalischen Prinzip trägt, eine Vakuum-Greifeinheit 11 mit einer Ansaugkammer 12 ist, wobei in der Ansaugkammer 12 und damit in einem begrenzten Bereich zwischen der Vakuum-Greifeinheit 10 und dem Werkstück 7 ein Unterdruck zum Halten des Werkstücks 7 erzeugbar ist.

Vorzugsweise weist eine Greifvorrichtung 6 mit einer Bemoulli-Greifeinheit 8 einen Bemoulli-Betriebsmodus auf, in dem das Werkstück 7 von der Bemoulli-Greifeinheit 8 gehalten wird und/oder eine Greifvorrichtung 6 mit einer Vakuum-Greifeinheit 11 einen Vakuum-Betriebsmodus auf, in dem das Werkstück 7 von der Vakuum-Greifeinheit 11 gehalten wird.

Hier und vorzugsweise ist es weiter so, dass eine Greifvorrichtung 6 eine Bemoulli-Greifeinheit 8 zum Betreiben der Greifvorrichtung 6 in einem Bemoulli-Betriebsmodus und eine Vakuum-Greifeinheit 11 zum Betreiben der Greifvorrichtung 6 in einem Vakuum-Betriebsmodus aufweist. Darüber hinaus kann die Greifvorrichtung 6 gegebenenfalls einen kombinierten Betriebsmodus aufweisen, in dem das Werkstück 7 von der Bemoulli-Greifeinheit 8 und von der Vakuum-Greifeinheit 11 gehalten wird.

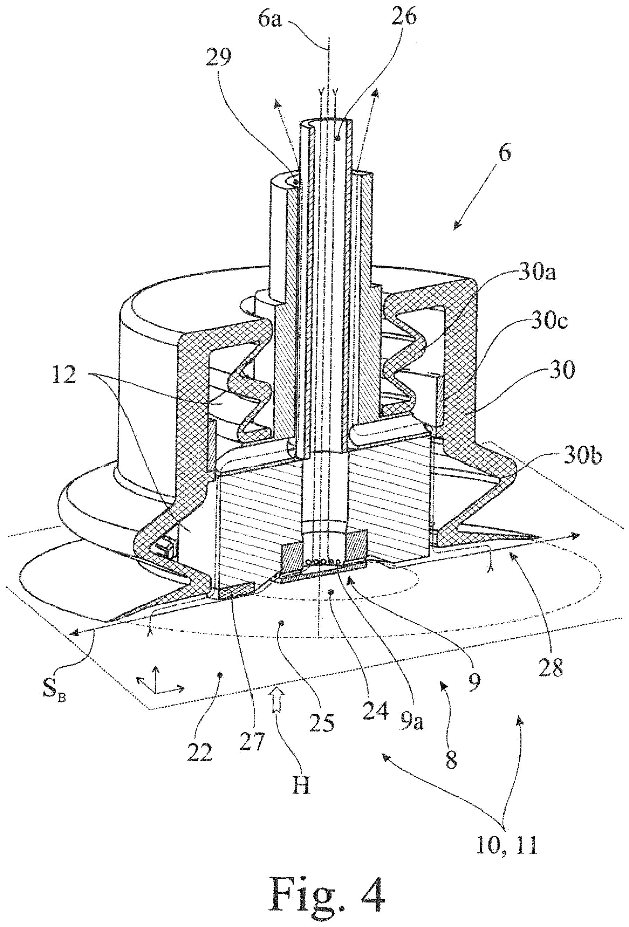

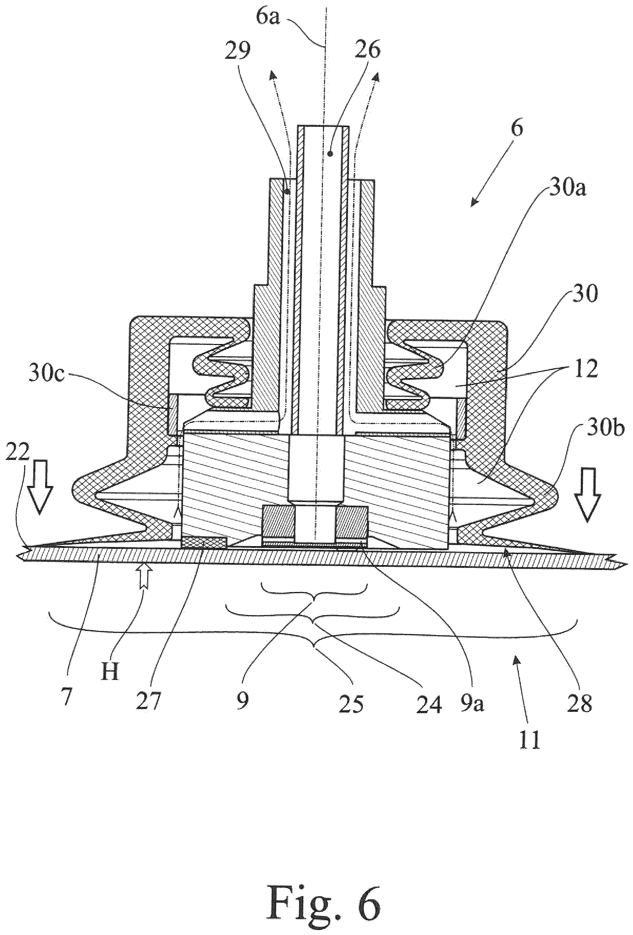

Eine bevorzugte Ausgestaltung der Greifvorrichtung 6 bzw. der Greifvorrichtungen 6 soll weiter unten detaillierter anhand der Fig. 4, 5 und 6 beschrieben werden. Zunächst soll jedoch auf eine bevorzugte Ausgestaltung des Endeffektors 2 eingegangen werden, wie dieser in den Fig. 1 bis 3 dargestellt ist.

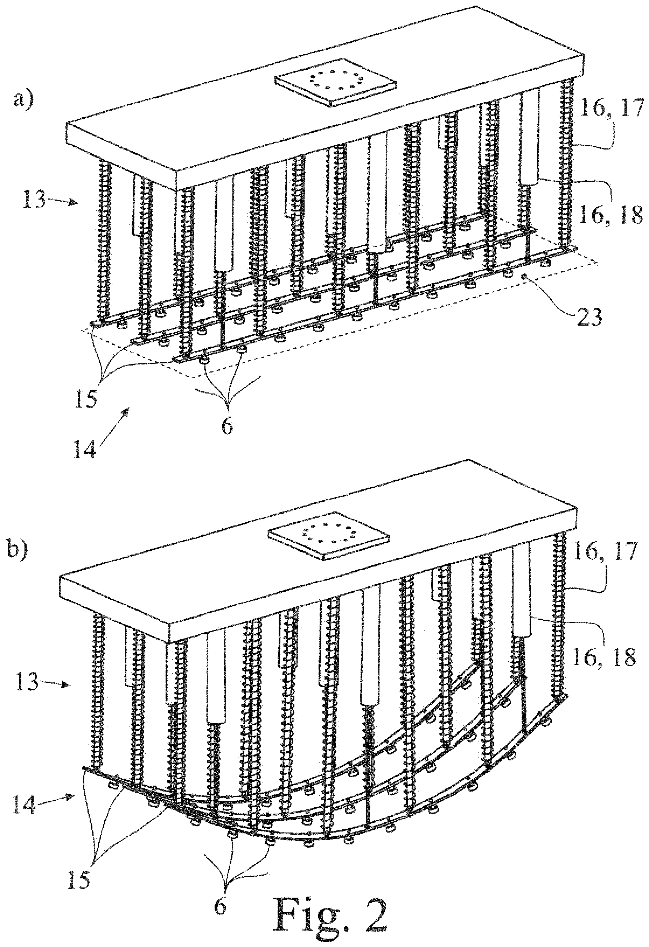

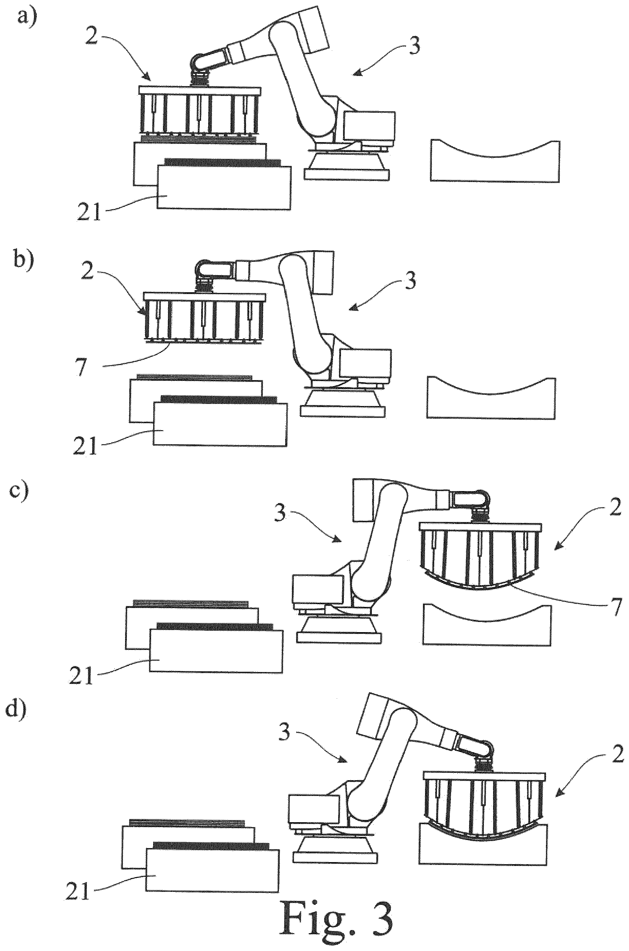

Der Endeffektor 2 weist eine Stellanordnung 13 auf, durch deren Verstellung die Greifvorrichtungen 6 der Werkzeuganordnung 5 zueinander verstellbar sind, vgl. Fig. 2. Zusätzlich kann der Endeffektor 2 eine Trägeranordnung 14 aufweisen, an der die die Werkzeuganordnung 5 bildenden Greifvorrichtungen 6 angeordnet sind und wobei mittels der Stellanordnung 13 die Greifvorrichtungen 5 zueinander durch eine Verstellung der Trägeranordnung 14 verstellbar sind. Dies ist beispielsweise im Ablauf der Fig. 3 gezeigt. Hierdurch ist es möglich, ein gehaltenes Werkstück 7 umzuformen.

Die Trägeranordnung 14 weist mindestens einen, vorzugsweise mindestens zwei, weiter vorzugsweise mindestens drei Träger 15 auf. Die Träger 15 sind zumindest zum Teil aus einem verformbaren Material, insbesondere elastisch verformbaren Material, ausgestaltet. Hierbei kann es sich insbesondere um ein Kunststoffmaterial und/oder ein Gummimaterial handeln. Zusätzlich kann vorgesehen sein, dass die Träger 15 der Trägeranordnung 14 untereinander verbunden sind.

Die Stellanordnung 13 weist mindestens einen, insbesondere stufenlos, verstellbaren Stellantrieb 16 auf. Dieser wirkt hier und vorzugsweise von der dem Werkstück 7 abgewandten Seite des Trägers 15 aus auf den Träger 15 zu dessen Verformung.

Im Ausführungsbeispiel sind mehrere Stellantriebe 16 über die Oberfläche des Trägers 15 verteilt angeordnet. Dabei kann es sich auch um verschiedene Arten von Stellantrieben 16 handeln. Diese werden vorzugsweise pneumatisch angetrieben.

Vorzugsweise ist mindestens ein Stellantrieb 16 als pneumatischer Muskel 17 ausgebildet. Dieser weist vorzugsweise einen schlauchartigen Abschnitt auf. Dieser schlauchartige Abschnitt ist mit einem Druck, insbesondere Luftdruck, beaufschlagbar, welcher eine Längenänderung des schlauchartigen Abschnitts bewirkt und damit zu der Erzeugung einer Antriebsbewegung führt.

Zusätzlich oder alternativ kann ein Stellantrieb 16 auch als pneumatischer Zylinder 18 ausgestaltet sein. Hier und vorzugsweise sind sowohl pneumatische Zylinder 18 als auch pneumatische Muskel 17 als Stellantriebe 16 vorgesehen.

Zur weiteren Ausgestaltung des Endeffektors wird auf die DE 10 2015 009 177 und/oder die DE 10 2011 106 214 A1 verwiesen. Diese Anmeldungen werden bezüglich der Ausgestaltung des Endeffektors 2 zum Gegenstand dieser Anmeldung gemacht.

Die Endeffektoranordnung 1 bzw. der Manipulator 3, insbesondere der Endeffektor 2, weist vorzugsweise eine schaltbare Ventilvorrichtung 19 zum Anschluss der Greifvorrichtungen 6 an eine Versorgungsquelle 20 auf. Vorzugsweise weist die Ventilvorrichtung 19 mehrere Ventile auf.

Es können auch mehrere Versorgungsquellen 20 vorgesehen sein. Bei der Versorgungsquelle 20 bzw. den Versorgungsquellen 20 kann es sich um eine Druckquelle und/oder eine Unterdruckquelle handeln.

Hier sind die Bernoulli-Greifeinheit 8 und die Vakuum-Greifeinheiten 11 an unterschiedliche Versorgungsquellen 20 angeschlossen, in diesem Fall an zwei Druckquellen 20a, 20b. Eine Druckquelle 20a versorgt eine Venturi-Düse bzw. mehrere Venturi-Düsen mit Druckluft zur Erzeugung des Unterdrucks für die Vakuum-Greifeinheit 11. Eine Druckquelle 20b versorgt die Bernoulli-Greifeinheit 6 mit Druckluft. Hier und vorzugsweise weisen die beiden Druckquellen unterschiedliche Druckniveaus auf. Insbesondere weist die Druckquelle 20a zur Versorgung der Vakuum-Greifeinheit 9 ein niedrigeres Druckniveau auf als die Druckquelle 20b zur Versorgung der Bernoulli-Greifeinheit 6.

Weiter vorzugsweise ist es so, dass mehrere Greifvorrichtungen 5 mittels der Ventilvorrichtung 19 in einer Gruppe an die Versorgungsquelle 20 anschließbar sind. Zum Schalten der Ventilvorrichtung 19 ist hier und vorzugsweise die Steuerung 4 vorgesehen. Diese steuert hier und vorzugsweise auch die Stellanordnung 13. Darüber hinaus kann die Steuerung 4 auch den Manipulator 3 steuern.

Die Gruppen von Greifvorrichtungen 6 können dabei auf unterschiedliche Weisen ausgebildet sein. Beispielsweise kann jeder Greifvorrichtung 6 ein eigenes Ventil der Ventilvorrichtung 19 zugeordnet sein, so dass jede Greifvorrichtung 6 einzeln ansteuerbar ist. In diesem Fall kann das Anschließen der Greifvorrichtung 6 an die Versorgungsquelle 20 in einer Gruppe rein steuerungstechnisch durch die Steuerung 4 erfolgen. Vorzugsweise sind die Greifvorrichtungen 6 jedoch bereits in Gruppen an Ventile der Ventilvorrichtung 19 in der Art angeschlossen, dass eine Gruppe nur gemeinsam geschaltet werden kann. Hierdurch können Ventile eingespart werden.

Eine Gruppe kann in einem Ausführungsbeispiel in Form eines Kranzes gebildet sein, ferner kann eine Gruppe durch zentral am Endeffektor 2 angeordnete Greifvorrichtungen 6 gebildet sein. Vorzugsweise bilden zwei in den Ecken eines Endeffektors 2 angeordnete Greifvorrichtungen 6 eine Gruppe und/oder eine Reihe von, insbesondere an einer Kante angeordneten, Greifvorrichtungen 6 eine Gruppe. Darüber hinaus können auch einzelne, nicht nebeneinander am Endeffektor 2 angeordnete Greifvorrichtungen 6 eine Gruppe bilden.

Vorschlagsgemäß wird die Endeffektoranordnung 1 bzw. der Manipulator 3 mit einer Endeffektoranordnung 1 in der Art betrieben, dass die Steuerung 4 zwischen einem Halten des Werkstücks 7 mittels mindestens einer Bemoulli-Greifeinheit 8 und mit einem Halten mit mindestens einer andersartigen Greifeinheit 10, insbesondere einer Vakuum-Greifeinheit 11, während des Haltens des Werkstücks 7 umschaltet. Besonders bevorzugt schaltet die Steuerung während des Haltens des Werkstücks 7 eine Greifvorrichtung 6 zwischen einem Halten mittels einer Bernoulli-Greifeinheit 8 und einem Halten mittels der andersartigen Greifeinheit 10, insbesondere der Vakuum-Greifeinheit 11, um.

Das Umschalten der Greifvorrichtungen 6 bzw. zwischen verschiedenen Greifvorrichtungen 6 erfolgt hier und vorzugsweise sequentiell. Das Umschalten der Greifvorrichtungen bzw. von Gruppen von Greifvorrichtungen erfolgt hier und vorzugsweise also zeitversetzt. Hierdurch kann das Werkstück sicher während des Umschaltens gehalten werden, da immer mindestens eine, vorzugsweise mehrere Greifvorrichtungen das Werkstück 7 beim Umschalten von Greifvorrichtungen bzw. zwischen Greifvorrichtungen halten.

Aufgenommen und/oder abgelegt wird das Werkstück 7 hier und vorzugsweise von dem Endeffektor 2 mit mindestens einer Greifvorrichtung 6, vorzugsweise mit der Mehrzahl der aktiven, weiter vorzugsweise allen aktiven Greifvorrichtungen 6, im Vakuum-Betriebsmodus. Hierdurch kann eine Beeinträchtigung von umliegenden Werkstücken durch die Strömung S_{B} einer Bemoulli-Einheit 8 vermieden werden. Nach dem Aufnehmen des Werkstücks 7 wird bzw. werden mindestens eine Greifvorrichtung 6, vorzugsweise die Mehrzahl der aktiven Greifvorrichtungen 6, insbesondere alle aktiven Greifvorrichtungen 6, während des Haltens des Werkstücks 7 von einem Vakuum-Betriebsmodus in einen Bemoulli-Betriebsmodus umgeschaltet. Es kann bzw. können jedoch hier und vorzugsweise auch mindestens eine Greifvorrichtung 6, vorzugsweise mindestens zwei Greifvorrichtungen 6, weiter vorzugsweise genau zwei Greifvorrichtungen 6, im Vakuum-Betriebsmodus verbleiben.

Der Endeffektor 2 kann das Werkstück 7 haltend dieses relativ zu der Werkzeuganordnung 5 verlagern, indem er es gegen eine, insbesondere ortsfeste, Ausrichtfläche 21 drückt. Vorzugsweise befinden sich alle aktiven Greifvorrichtungen 6 im Bemoulli-Betriebsmodus.

Darüber hinaus kann hier und vorzugsweise der Endeffektor 2 das Werkstück 7 nach dem Aufnehmen (Fig. 3a) durch eine Verstellung der Stellanordnung 13 vor dem Ablegen (Fig. 3d) umformen. Dies ist anhand der Fig. 3b und 3c zu erkennen. Zum Umformen wird hier und vorzugsweise die Mehrzahl, insbesondere alle aktiven Greifvorrichtungen 6 mit Ausnahme von ein oder zwei Greifvorrichtungen 6 im Bemoulli-Betriebsmodus betrieben.

Alternativ zum Verlagern des Werkstücks 7 relativ zur Werkzeuganordnung 5 über das Drücken an eine Ausrichtfläche 21, kann das Werkstück 7 auch durch Umformen des Werkstücks 7 relativ zur Werkzeuganordnung 5 verlagert werden. Hierzu werden hier und vorzugsweise die Mehrzahl, insbesondere alle aktiven Greifvorrichtungen 6 mit Ausnahme von ein oder zwei Greifvorrichtungen 6 im Bemoulli-Betriebsmodus betrieben. Durch zwei gegenläufige Umformbewegungen des Endeffektors 2, bei denen unterschiedliche aktive Greifvorrichtungen nicht im Bemoulli-Betriebsmodus, insbesondere im Vakuum-Betriebsmodus, betrieben werden, ist das Verlagern des Werkstücks 7 gegenüber der Werkzeuganordnung 5 nach Art einer Schlangenbewegung möglich.

Entsprechend wird nach dem Aufnehmen und/oder vor dem Ablegen, insbesondere während eines Transports und/oder des Umformens des Werkstücks 7, das Werkstück 7 von dem Endeffektor 2 mittels der Mehrzahl der aktiven Greifvorrichtungen 6, weiter vorzugsweise allen aktiven Greifvorrichtungen 6, insbesondere mit der Ausnahme von ein oder zwei Greifvorrichtungen 6, im Bemoulli-Betriebsmodus gehalten.

Vor dem Ablegen des Werkstücks 7 wird bzw. werden mindestens eine Greifvorrichtung 6, vorzugsweise die Mehrzahl der aktiven Greifvorrichtungen 6, insbesondere alle aktiven Greifvorrichtungen 6, während des Haltens des Werkstücks 7 von einem Bernoulli-Betriebsmodus in einen Vakuum-Betriebsmodus umgeschaltet. Um das Lösen des Werkstücks 7 zu erleichtern, kann vorgesehen sein, dass beim Ablegen des Werkstücks 7 im Vakuum-Betriebsmodus zum Lösen der Greifvorrichtung 6 von dem Werkstück 7 ein Druckluftimpuls von mindestens einer Bernoulli-Greifeinheit 8, weiter vorzugsweise mindestens einer Mehrzahl der Bemoulli-Greifeinheiten 8, insbesondere allen Bernoulli-Greifeinheiten 8, erzeugt wird.

Zur Durchführung der vorbeschriebenen Verfahren ist hier und vorzugsweise die Steuerung 4 zum Schalten der Greifvorrichtungen 6 einzeln oder in Gruppen in verschiedene Betriebsmodi ausgebildet. Vorzugsweise kann die Steuerung 4 die Greifvorrichtungen 6 in einen Betriebsmodus aktiv, in den die Greifvorrichtung 6 eine Haltekraft auf das Werkstück 7 ausüben kann bzw. ausübt und in einen Betriebsmodus inaktiv, in dem die Greifvorrichtung 6 keine Haltekraft auf das Werkstück 7 ausübt bzw. ausüben kann, schalten. Der Betriebsmodus "aktiv" weist hier und vorzugsweise einen Vakuum-Betriebsmodus und/oder einen Bernoulli-Betriebsmodus und gegebenenfalls einen kombinierten Betriebsmodus auf. Auch in diese Betriebsmodi kann die Steuerung 4 hier und vorzugsweise die Greifeinheiten 6 schalten, bzw. zwischen diesen Betriebsmodi umschalten.

Die Greifvorrichtung 6 an sich soll nun näher anhand der Fig. 4 bis 6 beschrieben werden. An dem vorschlagsgemäßen Endeffektor 2 sind, wie bereits beschrieben, mehrere Greifvorrichtungen 6 vorgesehen. Die Greifvorrichtungen 6 halten das Werkstück 7 hier und vorzugsweise über den einzelnen Greifvorrichtungen 6 zugeordnete Greifflächen 22. Diese bilden hier und vorzugsweise eine Gesamtgreiffläche 23.

Die Greifvorrichtung 6 weist eine Bernoulli-Greifeinheit 8 auf. Die Bemoulli-Greifeinheit weist eine Ausströmeinheit 9 zum Ausleiten einer Strömung S_{B} aus der Bemoulli-Greifeinheit 8 zwischen Greifvorrichtung 6 und Werkstück 7 in der Art auf, dass durch die Strömung S_{B} in einem begrenzten Bereich - Bemoulli-Unterdruck-Bereich 24 - auf der Greiffläche 22 ein statischer Unterdruck zum Halten des Werkstückes 7 erzeugbar ist. Die Strömung weist zusätzlich zu dem statischen Druckanteil einen dynamischen Druckanteil auf. Diesbezüglich wird auf die Bernoullische Gleichung verwiesen.

Ferner weist die vorschlagsgemäße Greifvorrichtung 6 eine Vakuum-Greifeinheit 11 auf. Diese umfasst eine Ansaugkammer 12. Mit der Ansaugkammer 12 ist in einem begrenzten Bereich auf der Greiffläche 22 - Vakuum-Unterdruck-Bereich 25 - ein statischer Unterdruck zum Halten des Werkstückes 7 erzeugbar. Hier und vorzugsweise stellt sich beim Halten des Werkstücks 7 ein statischer Zustand ein. Vorzugsweise tritt beim Halten mit der Vakuum-Greifeinheit 11 in der Ansaugkammer 12 im Wesentlichen keine Strömung auf, so dass hier der dynamische Druck im Wesentlichen gleich null ist.

Bei der Verwendung des Begriffs "Vakuum" ist hier ein gegenüber dem Umgebungsdruck geringerer Druck gemeint. Dies gilt insbesondere in Zusammenhang mit den Begriffen "Vakuum-Greifeinheit", "Vakuum-Unterdruck-Bereich" und "Vakuum-Betriebsmodus",

Beim Halten des Werkstückes 7 bildet die Ansaugkammer 12 hier und vorzugsweise mit dem Werkstück 7 im Wesentlichen einen geschlossenen Raum. Hierdurch muss nur zum Aufnehmen eines Werkstückes 7 ein Unterdruck in der Ansaugkammer 12 erzeugt werden, welcher dann zum Halten des Werkstückes 7 im Wesentlichen nur erhalten werden muss. Dies ermöglicht einen besonders niedrigen Energieverbrauch. Insofern ist der Bereich zwischen dem Werkstück 7 und der Greifvorrichtung 6 beim Halten des Werkstücks 7 mit der Vakuum-Greifeinheit 11 im Wesentlichen strömungsfrei ausgebildet. Bei dem Halten des Werkstückes 7 mit der Vakuum-Greifeinheit 11 stellt sich somit im Wesentlichen ein statischer Zustand in der Greifvorrichtung 6, insbesondere in der Ansaugkammer 12, ein.

Im Gegensatz hierzu wird zum Halten des Werkstückes 7 mit der Bemoulli-Greifeinheit 6 durchgehend eine Strömung S_{B}, zumindest in einem Teilbereich zwischen der Greifvorrichtung 6 und dem Werkstück 7, erzeugt.

Um eine besonders kompakte, das Werkstück 7 sicher haltende und flexibel einsetzbare Greifvorrichtung 6 zu schaffen, überschneiden sich der Bemoulli-Unterdruck-Bereich 24 und der Vakuum-Unterdruck-Bereich 25 hier zumindest teilweise, oder, der Bernoulli-Unterdruck-Bereich 24 und der Vakuum-Unterdruck-Bereich 25 umgeben sich einander. Hierdurch kann die Greifvorrichtung äußerst flexibel für unterschiedlich große Werkstücke 7 eingesetzt werden.

In dem in den Figuren gezeigten Ausführungsbeispiel ist der Bemoulli-Unterdruck-Bereich 24 vollständig im Vakuum-Unterdruck-Bereich 25 angeordnet. Alternativ kann aber auch vorgesehen sein, dass der Vakuum-Unterdruck-Bereich 25 vollständig im Bemoulli-Unterdruck-Bereich 24 angeordnet ist.

Ferner kann vorgesehen sein, dass der Bemoulli-Unterdruck-Bereich 24 und der Vakuum-Unterdruck-Bereich 25 einander umgeben. In diesem Fall können der Bemoulli-Unterdruck-Bereich 24 und der Vakuum-Unterdruck-Bereich 25 voneinander getrennt sein. Besonders bevorzugt grenzen der Bernoulli-Unterdruck-Bereich 24 und der Vakuum-Unterdruck-Bereich 25 in diesem Fall direkt aneinander an und werden insbesondere lediglich durch eine Barriere getrennt.

Wie in den Fig. 4 bis 6 gezeigt, ist die Bemoulli-Greifeinheit 8 zumindest zum Teil, hier und vorzugsweise vollständig, in der Vakuum-Greifeinheit 11 angeordnet. Die Bemoulli-Greifeinheit 8 kann dabei zumindest zum Teil, hier und vorzugsweise vollständig, in der Ansaugkammer 12 angeordnet sein. In einer alternativen Ausgestaltung kann jedoch auch vorgesehen sein, dass die Vakuum-Greifeinheit 11 zumindest zum Teil, vorzugsweise vollständig, in der Bemoulli-Greifeinheit 8 angeordnet ist.

Die Bernoulli-Greifeinheit 8 ermöglicht hier und vorzugsweise ein schwimmendes Halten des flächigen Werkstückes 7 mit einem Bewegungsfreiheitsgrad. Hier und vorzugsweise ist der von einer Bernoulli-Greifeinheit 8 gehaltene Bereich des Werkstücks 7 relativ zu der Bernoulli-Greifeinheit 8 orthogonal in zwei Achsen zu der Haltekraft H bewegbar, welche aus dem von der Bernoulli-Greifeinheit 8 erzeugten statischen Unterdruck resultiert.

Hier ist das Werkstück 7 also entlang der Werkstückfläche während des Haltens des Werkstückes 7 bewegbar. Die das Halten des Werkstückes 7 mit der Bernoulli-Greifeinheit 8 ermöglichende Strömung S_{B} bildet dabei hier und vorzugsweise ein Luftkissen, auf dem das Werkstück 7 verlagerbar ist.

Die Vakuum-Greifeinheit 11 erlaubt hier und vorzugsweise dagegen ein festes Halten des Werkstückes 7 ohne Bewegungsfreiheitsgrad des Werkstückes 7 entlang der Werkstückfläche. Das Werkstück 7 ist gegenüber der Vakuum-Greifeinheit 11 im Vakuum-Betriebsmodus somit nicht verlagerbar. Insofern bildet eine aktive Bemoulli-Greifeinheit 8 eine Art Gleitlager, während eine aktive Vakuum-Greifeinheit 11 eine Art Festlager für das Werkstück 7 bildet.

Hier weist die Greifvorrichtung 6 vorzugsweise einen Bemoulli-Betriebsmodus auf, in dem das Werkstück 7 von der Bernoulli-Greifeinheit 8 gehalten wird, und/oder einen Vakuum-Betriebsmodus auf, in dem das Werkstück 7 von der Vakuum-Greifeinheit 11 gehalten wird. Zusätzlich oder alternativ kann die Greifvorrichtung 6 einen kombinierten Betriebsmodus aufweisen, in dem das Werkstück 7 von der Bemoulli-Greifeinheit 8 und von der Vakuum-Greifeinheit 11 gehalten wird. Hier und vorzugsweise ist es so, dass die Greifvorrichtung 6 im Bemoulli-Betriebsmodus das Werkstück 7 vornehmlich, insbesondere ausschließlich, durch die Bernoulli-Greifeinheit 8 bzw. im Vakuum-Betriebsmodus vornehmlich, insbesondere ausschließlich, durch die Vakuum-Greifeinheit 11 hält.

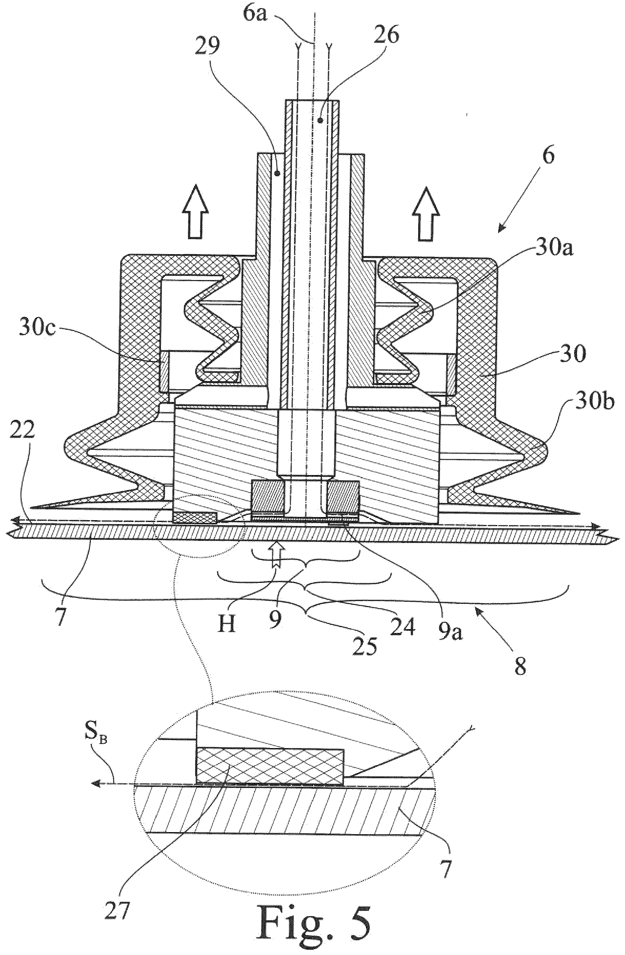

Die Bemoulli-Greifeinheit 8 weist eine Druckleitung 26 zum Anlegen der Druckluft an die, insbesondere zylinderförmige, Ausströmeinheit 9 auf. Wie in der Fig. 5 gezeigt, strömt die Druckluft durch die Druckleitung in die Ausströmeinheit 9 und wird von dieser radial ausgeleitet. Hierzu weist die Ausströmeinheit 9 hier und vorzugsweise eine Vielzahl von Öffnungen 9a auf, welche über den Radius verteilt sind. Vorzugsweise verlaufen die Mittelachsen der Öffnungen 9a im Wesentlichen parallel zur Greiffläche 22. Alternativ können diese jedoch auch in einem Winkel von bis zu 30° gegenüber der Greiffläche 22 geneigt sein. Wie in der Fig. 5 zu sehen, bildet sich hier und vorzugsweise zwischen dem Werkstück 7 und der Greifvorrichtung 6, insbesondere der Bemoulli-Greifeinheit 8, ein Luftpolster aus, welches durch die Strömung S_{B} gebildet wird, welche auch den Unterdruck zum Halten des Werkstückes 7 erzeugt. Das Werkstück 7 wird von der Bemoulli-Greifeinheit 8 hier im Wesentlichen berührungsfrei gehalten.

Ferner weist die Greifvorrichtung 6, insbesondere die Bernoulli-Greifeinheit 8 Abstützelemente 27 auf. Diese stellen sicher, dass zwischen Werkstück 7 und Greifvorrichtung 6 im Bemoulli-Betriebsmodus ein Spalt verbleibt, vgl. Fig. 5. Auf diese Weise kann ein Abreißen der Strömung S_{B} vermieden werden. Das Werkstück 7 kann im Bemoulli-Betriebsmodus sicher gehalten werden.

Die Vakuum-Greifeinheit 11 weist die Ansaugkammer 12 auf. Die Ansaugkammer 12 mündet in eine Ansaugöffnung 28, welche hier den Vakuum-Unterdruck-Bereich 25 auf der Greiffläche 22 begrenzt. Die Haltekraft zum Halten des Werkstücks 7 wird durch das Anlegen eines Unterdrucks an die Ansaugkammer 12 erzeugt. Hierzu kann diese über eine Unterdruckleitung 29 an eine Unterdruckquelle 20b, insbesondere Unterdruckpumpe, und/oder eine Venturi-Düse angeschlossen werden.

Die Ansaugkammer 12 ist vorzugsweise zumindest abschnittsweise rohrartig ausgebildet. Sie wird hier und vorzugsweise durch einen Balgsaugkörper 30, vorzugsweise einen Faltenbalgsaugkörper gebildet. Im Balgsaugkörper 30 ist hier und vorzugsweise ein Verstärkungselement 30c, insbesondere aus Kunststoff und/oder Metall angeordnet.

Wie in der Fig. 5 gezeigt, ist dieser Balgsaugkörper 30 vorzugsweise an der Greifvorrichtung im Übrigen, insbesondere über einen eigenen Federabschnitt 30a, federnd gelagert. Darüber hinaus weist der Balgsaugkörper 30 einen Federabschnitt 30b im Bereich der Ansaugöffnung zum federnden Anlegen an das Werkstück auf.

Der Balgsaugkörper 30 kann einteilig, insbesondere einstückig, wie in den Fig. 3 bis 5 gezeigt, ausgebildet sein, oder er kann mehrteilig ausgebildet sein. Der Balgsaugkörper 30 kann mehrere, insbesondere zwei oder drei, Balgsaugkörperteile aufweisen. Diese können sich in ihren Materialeigenschaften unterscheiden.

Wie in der Fig. 1 zu sehen ist, sind hier in der Ansaugöffnung 28 Stützabschnitte 31 zum Abstützen und Anlegen an das Werkstück 7 vorgesehen. Diese sind hier und vorzugsweise am Balgsaugkörper 30 ausgebildet.

Ferner weist die Vakuum-Greifeinheit 11 eine Unterdruckleitung 29 zum Anlegen eines Unterdruckes in der Ansaugkammer 12 auf. Hier verlaufen die Mittelachsen der Unterdruckleitung 29 und der Druckleitung 26 zumindest abschnittsweise koaxial. Besonders bevorzugt ist es, wenn die Unterdruckleitung 29 in der Druckleitung 26 aufgenommen ist, und/oder, wenn die Druckleitung 26 in der Unterdruckleitung 29 aufgenommen ist, wie dies im Ausführungsbeispiel gezeigt ist. Eine solche Ausbildung ermöglicht einen ganz besonders einfachen Anschluss der Greifvorrichtung 6 an einen Endeffektor 2.

Hier und vorzugsweise ist die Greifvorrichtung 6 als eine vormontierte Einheit ausgebildet, welche als Einheit an einen Endeffektor 2 montierbar ist. In dem Fall, dass die Unterdruckleitung 29 in der Druckleitung 26 bzw. die Druckleitung 26 in der Unterdruckleitung 29 aufgenommen ist, ist eine solche Montage besonders einfach durch eine Schraubverbindung möglich. Hier und vorzugsweise wird die Greifvorrichtung 6 kraft- und/oder formschlüssig mit dem Endeffektor 2 verbunden, so dass ein einfacher Austausch einer defekten Greifvorrichtung 6 möglich ist.

## Patentansprüche

1. Endeffektoranordnung mit einem Endeffektor (2) für einen Manipulator (3) und mit einer Steuerung (4) für den Endeffektor (2),
wobei der Endeffektor (2) eine Werkzeuganordnung (5) mit mehreren Greifvorrichtungen (6) zum Halten eines Werkstücks (7) über eine Werkzeugoberfläche (22) aufweist, wobei der Endeffektor (2) eine Stellanordnung (13) aufweist, durch deren Verstellung die Greifvorrichtungen (6) der Werkzeuganordnung (5) zueinander verstellbar sind,
wobei mindestens eine Greifvorrichtung (6) eine Bernoulli-Greifeinheit (8) aufweist, welche eine Ausströmeinheit (9) zum Ausleiten einer Strömung (S_{B}) aus der Bernoulli-Greifeinheit (8) zwischen Greifvorrichtung (6) und Werkstückoberfläche (22) in der Art aufweist, dass die Strömung (S_{B}) in einem Bereich zwischen Greifvorrichtung (6) und Werkstückoberfläche (22) einen statischen Unterdruck zum Halten des Werkstücks (7) erzeugt,
und wobei mindestens eine Greifvorrichtung (6) eine andersartige Greifeinheit (10) aufweist, welche das Werkstück (7) nach einem verglichen mit der Bernoulli-Greifeinheit (8) anderen physikalischen Prinzip hält,
**dadurch gekennzeichnet,**
**dass** die Steuerung (4) dazu eingerichtet ist, während des Haltens des Werkstücks (7) den Endeffektor (2) zwischen einem Halten des Werkstücks (7) mittels mindestens einer Bernoulli-Greifeinheit (8) und einem Halten mit mindestens einer andersartigen Greifeinheit (10) umzuschalten.

2. Endeffektoranordnung nach Anspruch 1, **dadurch gekennzeichnet, dass** eine Greifvorrichtung (6) die Bernoulli-Greifeinheit (8) und die andersartige Greifeinheit (10) aufweist.

3. Endeffektoranordnung nach Anspruch 1 oder 2, **dadurch gekennzeichnet, dass** die andersartige Greifeinheit (10), welche das Werkstück (7) nach einem anderen physikalischen Prinzip trägt, eine Vakuum-Greifeinheit (11) mit einer Ansaugkammer (12) ist, wobei in der Ansaugkammer (12) und damit in einem begrenzten Bereich zwischen der Vakuum-Greifeinheit (11) und dem Werkstück (7) ein Unterdruck zum Halten des Werkstücks (7) erzeugbar ist.

4. Endeffektoranordnung nach einem der vorhergehenden Ansprüche, **dadurch gekennzeichnet, dass** eine Greifvorrichtung (6) mit einer Bernoulli-Greifeinheit (8) einen Bernoulli-Betriebsmodus aufweist, in dem das Werkstück (7) von der Bernoulli-Greifeinheit (8) gehalten wird, und/oder, dass eine Greifvorrichtung (6) mit einer Vakuum-Greifeinheit (11) einen Vakuum-Betriebsmodus aufweist, in dem das Werkstück (7) von der Vakuum-Greifeinheit (11) gehalten wird, vorzugsweise, dass eine Greifvorrichtung (6) eine Bernoulli-Greifeinheit (8) zum Betreiben der Greifvorrichtung (6) in einem Bernoulli-Betriebsmodus und eine Vakuum-Greifeinheit (11) zum Betreiben der Greifvorrichtung (6) in einem Vakuum-Betriebsmodus aufweist, weiter vorzugsweise, dass die Greifvorrichtung (6) einen kombinierten Betriebsmodus aufweist, in dem das Werkstück (7) von der Bernoulli-Greifeinheit (8) und von der Vakuum-Greifeinheit (11) gehalten wird.

5. Endeffektoranordnung nach einem der vorhergehenden Ansprüche, **dadurch gekennzeichnet, dass** der Endeffektor (2) eine Trägeranordnung (14) aufweist, an der die die Werkzeuganordnung (5) bildenden Greifvorrichtungen (6) angeordnet sind und dass mittels der Stellanordnung (13) die Greifvorrichtungen (6) durch eine Verstellung der Trägeranordnung (14) zueinander verstellbar sind.

6. Endeffektoranordnung nach einem der vorhergehenden Ansprüche, **dadurch gekennzeichnet, dass** die Stellanordnung (13) mindestens einen, insbesondere stufenlos, verstellbaren Stellantrieb (16) aufweist, der, insbesondere von der dem Werkstück (7) abgewandten Seite des Trägers (15) aus, auf den Träger (15) zu dessen Verformung wirkt, vorzugsweise, dass mehrere Stellantriebe (16) vorgesehen sind, die über die Oberfläche des Trägers (15) verteilt angeordnet sind.

7. Verfahren zum Betreiben einer Endeffektoranordnung (1) nach einem der vorhergehenden Ansprüche oder eines Manipulators (3) mit einer Endeffektoranordnung (1) nach einem der vorhergehenden Ansprüche,
wobei der Endeffektor (2) eine Werkzeuganordnung (5) mit mehreren Greifvorrichtungen (6) zum Halten eines flächigen Werkstücks (7) aufweist,
wobei die Steuerung (4) zwischen einem Halten des Werkstücks (7) mittels mindestens einer Bernoulli-Greifeinheit (8) und einem Halten mit mindestens einer andersartigen Greifeinheit (10), insbesondere einer Vakuum-Greifeinheit (11), während des Haltens des Werkstücks (7) umgeschaltet.

8. Verfahren nach Anspruch 7, **dadurch gekennzeichnet, dass** die Steuerung während des Haltens des Werkstücks (7) eine Greifvorrichtung (6) zwischen einem Halten mittels einer Bernoulli-Greifeinheit (8) und einem Halten mittels der andersartigen Greifeinheit (10), insbesondere der Vakuum-Greifeinheit (11), umschaltet.

9. Verfahren nach Anspruch 7 oder 8, **dadurch gekennzeichnet, dass** der Endeffektor (2) das Werkstück (7) durch eine Verstellung der Stellanordnung (13) vor dem Ablegen umformt.

10. Verfahren nach einem der Ansprüche 7 bis 9, **dadurch gekennzeichnet, dass** der Endeffektor (2), das Werkstück (7) haltend, dieses relativ zur Werkzeuganordnung (5) verlagert, vorzugsweise, dass der Endeffektor (2) durch das Drücken an eine, insbesondere ortsfeste, Ausrichtfläche (21) das Werkstück (7) relativ zur Werkzeuganordnung (5) verlagert, oder, dass der Endeffektor (2) durch das Umformen des Werkstücks (7) dieses relativ zur Werkzeuganordnung (5) verlagert.

11. Verfahren nach einem der Ansprüche 7 bis 10, **dadurch gekennzeichnet, dass** zum Verlagern des Werkstücks (7) relativ zur Werkzeuganordnung (5) alle aktiven Greifvorrichtungen (6) im Bernoulli-Betriebsmodus betrieben werden.

12. Verfahren nach einem der Ansprüche 7 bis 11, **dadurch gekennzeichnet, dass** die Steuerung (4) zum Schalten der Greifvorrichtungen (6) einzeln oder in Gruppen in verschiedene Betriebsmodi ausgebildet ist.

13. Verfahren nach einem der Ansprüche 7 bis 12, **dadurch gekennzeichnet, dass** das Werkstück (7) von dem Endeffektor (2) mit mindestens einer Greifvorrichtung (6) im Vakuum-Betriebsmodus aufgenommen und/oder abgelegt wird.

14. Verfahren nach einem der Ansprüche 7 bis 13, **dadurch gekennzeichnet, dass** nach dem Aufnehmen des Werkstücks (7) mindestens eine Greifvorrichtung (6), vorzugsweise die Mehrzahl der aktiven Greifvorrichtungen (6), insbesondere alle aktiven Greifvorrichtungen (6), während des Haltens des Werkstücks (7) von einem Vakuum-Betriebsmodus in einen Bemoulli-Betriebsmodus umgeschaltet wird bzw. werden,
und/oder,
dass vor dem Ablegen des Werkstücks (7) mindestens eine Greifvorrichtung (6), vorzugsweise die Mehrzahl der aktiven Greifvorrichtungen (6), insbesondere alle aktiven Greifvorrichtungen (6), während des Haltens des Werkstücks (7) von einem Bernoulli-Betriebsmodus in einen Vakuum-Betriebsmodus umgeschaltet wird bzw. werden.

15. Verfahren nach einem der Ansprüche 7 bis 14, **dadurch gekennzeichnet, dass** mindestens eine Greifvorrichtung (6), vorzugsweise mindestens zwei Greifvorrichtungen (6), weiter vorzugsweise genau zwei Greifvorrichtungen (6), im Vakuum-Betriebsmodus verbleiben.

16. Verfahren nach einem der Ansprüche 7 bis 15, **dadurch gekennzeichnet, dass** nach dem Aufnehmen und/oder vor dem Ablegen, insbesondere während eines Transports und/oder des Umformens des Werkstücks (7), das Werkstück (7) von dem Endeffektor (2) mittels der Mehrzahl der aktiven Greifvorrichtungen (6), weiter vorzugsweise allen aktiven Greifvorrichtungen (6), insbesondere mit der Ausnahme von ein oder zwei Greifvorrichtungen (6), im Bernoulli-Betriebsmodus gehalten wird.

17. Verfahren nach einem der Ansprüche 7 bis 16, **dadurch gekennzeichnet, dass** beim Ablegen des Werkstücks (7) im Vakuum-Betriebsmodus zum Lösen der Greifvorrichtungen (6) von dem Werkstück (7) ein Druckluftimpuls von mindestens einer Bernoulli-Greifeinheit (8), weiter vorzugsweise mindestens einer Mehrzahl der Bernoulli-Greifeinheiten (8), erzeugt wird.

18. Manipulator, insbesondere Roboter, mit mindestens drei Achsen, mit einer Endeffektoranordnung nach einem der Ansprüche 1 bis 6 und/oder zur Durchführung eines Verfahrens nach einem der Ansprüche 7 bis 17.

## Claims

1. End-effector arrangement having an end effector (2) for a manipulator (3) and having a controller (4) for the end effector (2),
wherein the end effector (2) has a tool arrangement (5) with multiple gripping devices (6) for holding a workpiece (7) via a tool surface (22), wherein the end effector (2) has an actuating arrangement (13) by way of whose adjustment the gripping devices (6) of the tool arrangement (5) are adjustable in relation to one another,
wherein at least one gripping device (6) has a Bernoulli gripping unit (8) having an outflow unit (9) for discharging a flow (S_{B}) from the Bernoulli gripping unit (8) between gripping device (6) and workpiece surface (22) in such a way that, in a region between gripping device (6) and workpiece surface (22), the flow (S_{B}) generates a static negative pressure for holding the workpiece (7),
and wherein at least one gripping device (6) has a different gripping unit (10), which holds the workpiece (7) according to a different physical principle in comparison with the Bernoulli gripping unit (8),
**characterized**
**in that** the controller (4) is configured to switch the state of the end effector (2) between a holding of the workpiece (7) by means of at least one Bernoulli gripping unit (8) and a holding by way of at least one different gripping unit (10), while the workpiece (7) is being held.

2. End-effector arrangement according to Claim 1, **characterized in that** a gripping device (6) has the Bernoulli gripping unit (8) and the different gripping unit (10).

3. End-effector arrangement according to Claim 1 or 2, **characterized in that** the different gripping unit (10) carrying the workpiece (7) according to a different physical principle is a vacuum gripping unit (11) with a suction chamber (12), wherein, in the suction chamber (12) and thus in a delimited region between the vacuum gripping unit (11) and the workpiece (7), a negative pressure for holding the workpiece (7) is able to be generated.

4. End-effector arrangement according to one of the preceding claims, **characterized in that** a gripping device (6) with a Bernoulli gripping unit (8) has a Bernoulli operating mode, in which the workpiece (7) is held by the Bernoulli gripping unit (8), and/or **in that** a gripping device (6) with a vacuum gripping unit (11) has a vacuum operating mode, in which the workpiece (7) is held by the vacuum gripping unit (11), preferably **in that** a gripping device (6) has a Bernoulli gripping unit (8) for operating the gripping device (6) in a Bernoulli operating mode and a vacuum gripping unit (11) for operating the gripping device (6) in a vacuum operating mode, furthermore preferably **in that** the gripping device (6) has a combined operating mode, in which the workpiece (7) is held by the Bernoulli gripping unit (8) and by the vacuum gripping unit (11).

5. End-effector arrangement according to one of the preceding claims, **characterized in that** the end effector (2) has a carrier arrangement (14) on which the gripping devices (6) forming the tool arrangement (5) are arranged, and **in that**, by means of the actuating arrangement (13), the gripping devices (6) are adjustable in relation to one another by way of adjustment of the carrier arrangement (14).

6. End-effector arrangement according to one of the preceding claims, **characterized in that** the actuating arrangement (13) has at least one, in particular continuously, adjustable actuating drive (16) which, in particular from that side of the carrier (15) which faces away from the workpiece (7), acts on the carrier (15) for deformation thereof, preferably **in that** provision is made of multiple actuating drives (16) which are arranged distributed over the surface of the carrier (15).

7. Method for operation of an end-effector arrangement (1) according to one of the preceding claims, or of a manipulator (3) having an end-effector arrangement (1) according to one of the preceding claims,
wherein the end effector (2) has a tool arrangement (5) with multiple gripping devices (6) for holding an areal workpiece (7),
wherein the controller (4) switches between a holding of the workpiece (7) by means of at least one Bernoulli gripping unit (8) and a holding by way of at least one different gripping unit (10), in particular a vacuum gripping unit (11), while the workpiece (7) is being held.

8. Method according to Claim 7, **characterized in that**, while the workpiece (7) is being held, the controller switches the state of a gripping device (6) between a holding by means of a Bernoulli gripping unit (8) and a holding by means of the different gripping unit (10), in particular the vacuum gripping unit (11).

9. Method according to Claim 7 or 8, **characterized in that** the end effector (2) deforms the workpiece (7) by way of adjustment of the actuating arrangement (13) prior to it being set down.

10. Method according to one of Claims 7 to 9, **characterized in that** the end effector (2), while holding the workpiece (7), displaces the latter relative to the tool arrangement (5), preferably **in that** the end effector (2), by way of pressing against an, in particular positionally fixed, aligning surface (21), displaces the workpiece (7) relative to the tool arrangement (5), or **in that** the end effector (2), by way of deformation of the workpiece (7), displaces the latter relative to the tool arrangement (5).

11. Method according to one of Claims 7 to 10, **characterized in that**, for the purpose of displacing the workpiece (7) relative to the tool arrangement (5), all the active gripping devices (6) are operated in the Bernoulli operating mode.

12. Method according to one of Claims 7 to 11, **characterized in that** the controller (4) is configured for switching the gripping devices (6) individually or in groups into different operating modes.

13. Method according to one of Claims 7 to 12, **characterized in that** the workpiece (7) is picked up and/or set down in the vacuum operating mode by the end effector (2) by way of at least one gripping device (6).

14. Method according to one of Claims 7 to 13, **characterized in that**, after the workpiece (7) has been picked up, at least one gripping device (6), preferably the majority of the active gripping devices (6), in particular all the active gripping devices (6), is/are switched from a vacuum operating mode into a Bernoulli operating mode while the workpiece (7) is being held,
and/or
**in that**, prior to the workpiece (7) being set down, at least one gripping device (6), preferably the majority of the active gripping devices (6), in particular all the active gripping devices (6), is/are switched from a Bernoulli operating mode into a vacuum operating mode while the workpiece (7) is being held.

15. Method according to one of Claims 7 to 14, **characterized in that** at least one gripping device (6), preferably at least two gripping devices (6), furthermore preferably exactly two gripping devices (6), remain in the vacuum operating mode.

16. Method according to one of Claims 7 to 15, **characterized in that**, after being picked up and/or prior to being set down, in particular during transport and/or deformation of the workpiece (7), the workpiece (7) is held in the Bernoulli operating mode by the end effector (2) by means of the majority of the active gripping devices (6), furthermore preferably all the active gripping devices (6), in particular with the exception of one or two gripping devices (6).

17. Method according to one of Claims 7 to 16, **characterized in that**, during the setting-down of the workpiece (7) in the vacuum operating mode, for the purpose of detaching the gripping devices (6) from the workpiece (7), a compressed-air pulse from at least one Bernoulli gripping unit (8), furthermore preferably at least a plurality of the Bernoulli gripping units (8), is generated.

18. Manipulator, in particular robot, with at least three axes, having an end-effector arrangement according to one of Claims 1 to 6 and/or for carrying out a method according to one of Claims 7 to 17.

## Revendications

1. Ensemble formant effecteur terminal comprenant un effecteur terminal (2) destiné à un manipulateur (3) et une commande (4) destinée à l'effecteur terminal (2),
l'effecteur terminal (2) comportant un ensemble formant outil (5) comprenant une pluralité de dispositifs de préhension (6) destinés à maintenir une pièce (7) au-dessus d'une surface d'outil (22), l'effecteur terminal (2) comportant un ensemble de réglage (13), dont le déplacement permet de déplacer les dispositifs de préhension (6) de l'ensemble formant outil (5) les uns par rapport aux autres,
au moins un dispositif de préhension (6) comportant une unité de préhension à effet Bernoulli (8), qui comporte une unité de sortie d'écoulement (9) destinée à diriger un écoulement (S_{B}) en sortie de l'unité de préhension à effet Bernoulli (8) entre le dispositif de préhension (6) et la surface de pièce (22) de manière que l'écoulement (S_{B}) génère une dépression statique dans une zone située entre le dispositif de préhension (6) et la surface de pièce (22) afin de maintenir la pièce (7),
et au moins un dispositif de préhension (6) comportant une unité de préhension (10) d'un autre type qui maintient la pièce (7) selon un autre principe physique que celui de l'unité de préhension à effet Bernoulli (8),
**caractérisé en ce que**
la commande (4) est conçue pour commuter l'effecteur terminal (2), pendant que la pièce (7) est maintenue, entre le maintien de la pièce (7) au moyen d'au moins une unité de préhension à effet Bernoulli (8) et le maintien de celle-ci avec au moins une unité de préhension (10) d'un autre type.

2. Ensemble formant effecteur terminal selon la revendication 1, **caractérisé en ce qu'**un dispositif de préhension (6) comporte l'unité de préhension à effet Bernoulli (8) et l'unité de préhension (10) d'un autre type.

3. Ensemble formant effecteur terminal selon la revendication 1 ou 2, **caractérisé en ce que** l'unité de préhension (10) d'un autre type, qui porte la pièce (7) selon un autre principe physique, est une unité de préhension à vide (11) comprenant une chambre d'aspiration (12), une dépression destinée à maintenir la pièce (7) pouvant être générée dans la chambre d'aspiration (12) et donc dans une zone limitée entre l'unité de préhension à vide (11) et la pièce (7).

4. Ensemble formant effecteur terminal selon l'une des revendications précédentes, **caractérisé en ce qu'**un dispositif de préhension (6) comprenant une unité de préhension à effet Bernoulli (8) comporte un mode de fonctionnement à effet Bernoulli dans lequel la pièce (7) est maintenue par l'unité de préhension à effet Bernoulli (8), et/ou **en ce qu'**un dispositif de préhension (6) comprenant une unité de préhension à vide (11) comporte un mode de fonctionnement à vide dans lequel la pièce (7) est maintenue par l'unité de préhension à vide (11), de préférence **en ce qu'**un dispositif de préhension (6) comporte une unité de préhension à effet Bernoulli (8) destinée à faire fonctionner le dispositif de préhension (6) dans un mode de fonctionnement à effet Bernoulli et une unité de préhension à vide (11) destinée à faire fonctionner le dispositif de préhension (6) dans un mode de fonctionnement à vide, plus préférablement **en ce que** le dispositif de préhension (6) comporte un mode de fonctionnement combiné dans lequel la pièce (7) est maintenue par l'unité de préhension à effet Bernoulli (8) et par l'unité de préhension à vide (11).

5. Ensemble formant effecteur terminal selon l'une des revendications précédentes, **caractérisé en ce que** l'effecteur terminal (2) comporte un ensemble formant support (14) sur lequel sont disposés les dispositifs de préhension (6) formant l'ensemble formant outil (5) et **en ce que** les dispositifs de préhension (6) peuvent être déplacés les uns par rapport aux autres par déplacement de l'ensemble formant support (14) au moyen de l'ensemble de réglage (13).

6. Ensemble formant effecteur terminal selon l'une des revendications précédentes, **caractérisé en ce que** l'ensemble de réglage (13) comporte au moins un entraînement de réglage (16), déplaçable notamment en continu, qui agit sur le support (15) afin de le déformer, en particulier du côté du support (15) qui est à l'opposé de la pièce (7), de préférence **en ce que** plusieurs entraînements de réglage (16) sont prévus qui sont disposés de manière répartie sur la surface du support (15).

7. Procédé de fonctionnement d'un ensemble formant effecteur terminal (1) selon l'une des revendications précédentes ou d'un manipulateur (3) comprenant un ensemble formant effecteur terminal (1) selon l'une des revendications précédentes,
l'effecteur terminal (2) comportant un ensemble formant outil (5) comprenant plusieurs dispositifs de préhension (6) destinés à maintenir une pièce (7) sensiblement bidimensionnelle,
la commande (4) commutant entre le maintien de la pièce (7) au moyen d'au moins une unité de préhension à effet Bernoulli (8) et le maintien de celle-ci avec au moins une unité de préhension (10) d'un autre type, en particulier une unité de préhension à vide (11), pendant que la pièce (7) est maintenue.

8. Procédé selon la revendication 7, **caractérisé en ce que**, pendant que la pièce (7) est maintenue, la commande commute un dispositif de préhension (6) entre le maintien au moyen d'une unité de préhension à effet Bernoulli (8) et le maintien au moyen de l'unité de préhension (10) d'un autre type, en particulier de l'unité de préhension à vide (11).

9. Procédé selon la revendication 7 ou 8, **caractérisé en ce que** l'effecteur terminal (2) déforme la pièce (7) avant de la déposer par déplacement de l'ensemble de réglage (13).

10. Procédé selon l'une des revendications 7 à 9, **caractérisé en ce que** l'effecteur terminal (2) déplace la pièce (7), en la maintenant, par rapport à l'ensemble formant outil (5), de préférence **en ce que** l'effecteur terminal (2) déplace la pièce (7) par rapport à l'ensemble formant outil (5) en exerçant une pression sur une surface d'orientation (21), notamment fixe, ou **en ce que** l'effecteur terminal (2) déplace la pièce (7) par rapport à l'ensemble formant outil (5) en la déformant.

11. Procédé selon l'une des revendications 7 à 10, **caractérisé en ce que** tous les dispositifs de préhension actifs (6) sont utilisés dans le mode de fonctionnement à effet Bernoulli afin de déplacer la pièce (7) par rapport à l'ensemble formant outil (5).

12. Procédé selon l'une des revendications 7 à 11, **caractérisé en ce que** la commande (4) est conçue pour commuter les dispositifs de préhension (6) individuellement ou en groupes dans différents modes de fonctionnement.

13. Procédé selon l'une des revendications 7 à 12, **caractérisé en ce que** la pièce (7) est saisie et/ou déposée par l'effecteur terminal (2) dont au moins un dispositif de préhension (6) est dans le mode de fonctionnement à vide.

14. Procédé selon l'une des revendications 7 à 13, **caractérisé en ce que**
après réception de la pièce (7), au moins un dispositif de préhension (6), de préférence la pluralité de dispositifs de préhension actifs (6), notamment tous les dispositifs de préhension actifs (6), sont commutés d'un mode de fonctionnement à vide à un mode de fonctionnement à effet Bernoulli pendant que la pièce (7) est maintenue,
et/ou,
avant de déposer la pièce (7), au moins un dispositif de préhension (6), de préférence la pluralité de dispositifs de préhension actifs (6), en particulier tous les dispositifs de préhension actifs (6), sont commutés d'un mode de fonctionnement à effet Bernoulli à un mode de fonctionnement à vide pendant que la pièce (7) est maintenue.

15. Procédé selon l'une des revendications 7 à 14, **caractérisé en ce qu'**au moins un dispositif de préhension (6), de préférence au moins deux dispositifs de préhension (6), plus préférablement exactement deux dispositifs de préhension (6), restent dans le mode de fonctionnement à vide.

16. Procédé selon l'une des revendications 7 à 15, **caractérisé en ce que**, après la réception et/ou avant le dépôt, notamment pendant le transport et/ou la déformation de la pièce (7), la pièce (7) est maintenue dans le mode de fonctionnement à effet Bernoulli par l'effecteur terminal (2) au moyen de la pluralité de dispositifs de préhension actifs (6), de préférence de tous les dispositifs de préhension actifs (6), notamment à l'exception d'un ou deux dispositifs de préhension (6).

17. Procédé selon l'une des revendications 7 à 16, **caractérisé en ce que**, lorsque la pièce (7) est déposée dans le mode de fonctionnement à vide pour libérer les dispositifs de préhension (6) de la pièce (7), une impulsion d'air comprimé est générée par au moins une unité de préhension à effet Bernoulli (8), plus préférablement au moins une pluralité d'unités de préhension à effet Bernoulli (8).

18. Manipulateur, notamment robot, à au moins trois axes, comprenant un ensemble formant effecteur terminal selon l'une des revendications 1 à 6 et/ou destiné à la mise en œuvre d'un procédé selon l'une des revendications 7 à 17.
